Europäisches Patentamt

European Patent Office

Office européen des brevets

(11) Publication number: **0 022 366**
**B1**

# EUROPEAN PATENT SPECIFICATION

(45) Date of publication of patent specification: **24.10.84**

(51) Int. Cl.³: **G 01 N 27/12**

(21) Application number: **80302283.9**

(22) Date of filing: **04.07.80**

(54) **A sensor circuit including a sensing device.**

(30) Priority: **04.07.79 JP 84646/79**

(43) Date of publication of application:
**14.01.81 Bulletin 81/02**

(45) Publication of the grant of the patent:
**24.10.84 Bulletin 84/43**

(84) Designated Contracting States:
**CH DE FR GB LI NL SE**

(56) References cited:
**EP-A-0 013 022**
**GB-A- 974 924**
**GB-A-1 282 993**
**GB-A-1 353 006**
**US-A-3 478 573**
**US-A-3 553 576**
**US-A-4 080 564**
**US-A-4 086 556**

**The file contains technical information submitted after the application was filed and not included in this specification**

(73) Proprietor: **Matsushita Electric Industrial Co., Ltd.**
**1006, Oaza Kadoma**
**Kadoma-shi Osaka-fu, 571 (JP)**

(72) Inventor: **Nagamoto, Shunichi**
**602, Misasagi-cho**
**Nara-shi, Nara-ken (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

The present invention relates to a sensor circuit including a sensing device.

For the purpose of automatic cooking appliances such as an electronic range, electric oven, etc., there has already been developed a method which the water vapour and various gases released from cooking food are detected by a sensing device and the cooking temperature is accordingly controlled. The sensing device usually employed in this type of cooking appliance includes a heating element disposed near a sensor element so as to vary the sensitivity of the sensor element or protect the sensor element against accumulation of dust from the ambient atmosphere and of vaporised oil, etc. from the food.

A previously-proposed sensing device includes a coil-shaped heater element wound around a sensor element, and two elements being electrically and physically separated from each other. Thus, the electric signal applied for causing the coil heater to generate heat does not exert and influence on the impedance signal generated by the sensor element and, therefore, the impedance of the sensor element can be easily detected. However, the sensing device of this type is disadvantageous in that, because the coil heater and sensor element are disposed in spaced-apart relationship, the heater must be supplied with considerable electric power in order to heat the sensor element, and also in that the heater and sensor element must be securely held in position in order to maintain their delicate spatial relation.

U.S.—A—3,478,573 discloses a sensor circuit comprising a sensing device which includes a planar sensor element disposed between first and second plate electrodes having predetermined exothermic resistance values and being disposed on opposite major surfaces of the sensor element, two lead wires extending from the first plate electrode, and a further lead wire extending from the second plate electrode, the circuit further comprising a first power source causing the first plate electrode to generate heat.

Variations in impedance across the sensor element are measured by a complex circuit involving an oscillator whose frequency depends on the impedance, and a frequency meter which then provides an indication of the humidity.

GB—A—974,924 discloses a circuit with a centre-balanced detection arrangement, the heater coil being supplied from the secondary winding of a transformer, one end of the detection circuit being connected to the centre tap of the secondary winding. The other end of the detection circuit is connected to the electrode opposite to the heater side of the sensor. Although such an arrangement permits simplified detection, it is necessary to utilise a transformer with a secondary winding having a centre tap; also A.C. power must be applied to the heater. Furthermore, the signal source in the detection circuit must be either of a frequency free of interference from the secondary winding of the transformer, or a D.C. signal source is disclosed.

U.S.—A—4,086,556 discloses a number of materials and compositions suitable for use in a humidity sensitive device.

The present invention provides a sensor circuit of the type broadly described above with reference to U.S.—A—3,478,573, characterised in that the circuit further comprises two resistances of substantially equal value directly connected in series between the two lead wires from the first plate electrode, the first power source also being directly connected to the two lead wires, and a second power source is interposed between the connection point of the two resistances and the further lead wire form the second plate electrode for detecting the impedance of the sensor element between the first and second plate electrodes.

It therefore becomes possible to devise a detection circuit in which the electric signal applied to the heating element does not influence the impedance detection signal from the sensor element.

In order that the present invention be more readily understood, an embodiment thereof will now be described by way of example with reference to the accompanying drawings, in which:—

Figures 1a and 1b, respectively, show front and back exterior views of a sensing device according to this invention;

Figure 2a shows a control circuit for the sensing device according to this invention;

Figure 2b is an equivalent circuit thereof; and

Figure 2c shows another control circuit for the sensing device according to this invention.

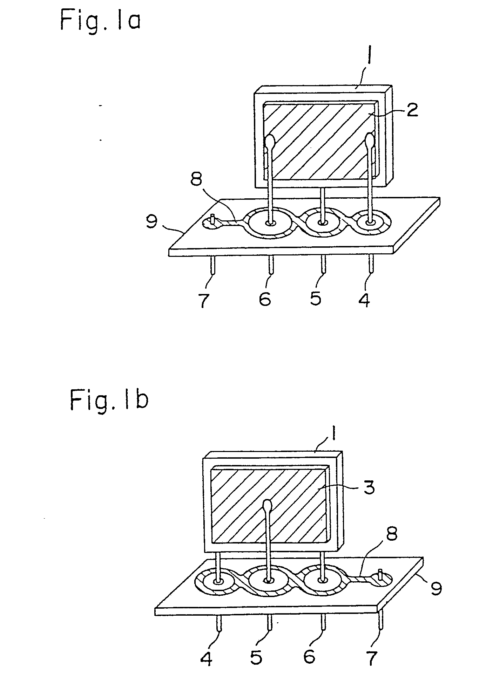

Referring to Figure 1a and Figure 1b, each of which is an exterior view of the sensor means according to this invention, a sensor element (1) is made of a ceramic material such as, for example, magnesium spinel-rutile $(MgCr_2O_4—TiO_2)$ and is sandwiched between a first plate electrode (2) and a second plate electrode (3) to form an integral structure. The first and second electrodes (2) and (3) are each made for example of ruthenium oxide $(RuO_2)$ and each has a predetermined resistance value. Lead wires (4) and (6) extend from said first electrode (2), and a lead wire (5) extends from said second electrode (3). The first electrode (2), in particular, functions as a heating element and generates heat when a voltage is applied between lead wires (4) and (6), whereby to heat the sensor element (1). A lead wire (7) is connected to a guard electrode (8) which is disposed on a substrate (9) so as to surround the lead wires (4), (5) and (6). The substrate (9) may be advantageously made of alumina $(Al_2O_3)$, to which lead wires (4), (5), (6) and (7) are rigidly secured and on which said guard electrode (8) is printed.

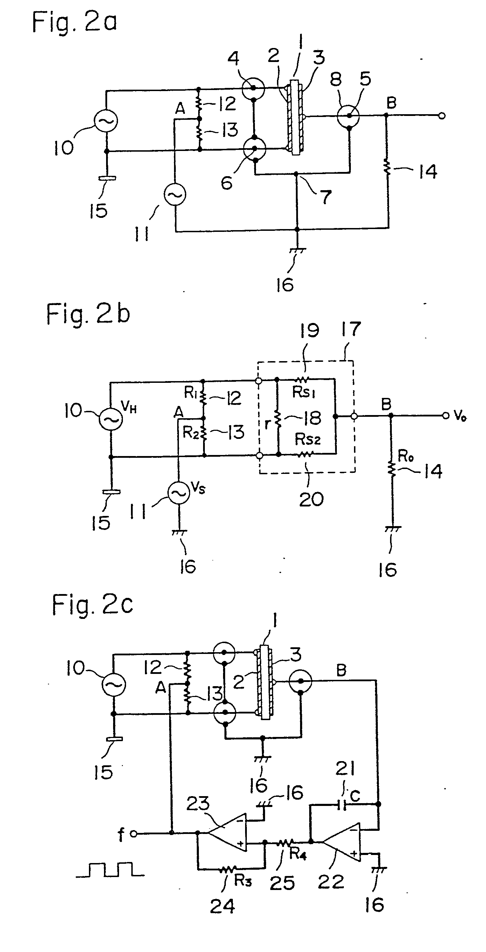

A circuit for controlling said sensor means will now be described with reference to Figures 2a and 2b. In Figure 2a there is shown a first power source (10) for applying a voltage to said first plate electrode (2) and thereby causing it to generate heat. The first power source (10) is earthed at (15) which is hereinafter referred to as a first earth. There is also shown a second power source (11), one end of which is connected to a junction point A between resistors (12) and (13) connected in series across the first power source (10), with the other end of the power source (11) being connected to a second earth (16). The other ends of said resistors (12) and (13) are connected to said lead wires (4) and (6), respectively of the sensing device. There is further shown a resistor (14) one end of which is connected to said lead wire (5) of the sensing device at a connection point B, with the other end being connected to said second earth (16). The guard electrode (8) and its lead wire (7) are also connected to the second earth (16). Figure 2b is an equivalent circuit diagram where the sensing device is indicated by the broken lines 17. Thus, the reference numeral (18) denotes an equivalent resistance r between the lead wires (4) and (6) of the first plate electrode (2). This resistance generates heat on supply of energy from the first power source (10) and thereby heats said sensor element (1). The reference numerals (19) and (20) represent the equivalent resistances Rs1 and Rs2 of the sensor element, which vary according to the concentration of water vapour or gas. In the above construction, the values $R_1$ and $R_2$ of resistors (12) and (13) respectively may be made sufficiently small as compared with the equivalent resistances Rs1 and Rs2 of sensor element and the equivalent resistance r of said first plate electrode (2) which inherently functions as an electrode assumes a sufficiently low value as compared with the equivalent resistances Rs1 and Rs2 of the sensor element. Therefore, the substantial equivalent resistance between connection points A and B may be regarded as a parallel resistance of equivalent resistances Rs1 and Rs2 of the sensor element and this may substantially be considered to be the impedance Rs of the sensor element. Let it now be assumed that there is no influence from the first power source (10). Then, the output voltage obtainable at both ends of the resistor (14) is:—

$$V_o = \frac{Ro}{Ro + Rs} \cdot V_s \qquad (1)$$

where Ro is the resistance value of resistor (14). The impedance Rs of sensor element (1) can thus be determined by measuring the voltage $V_s$ of the second power source (11) and the output voltage $V_o$.

While the above expression (1) is predicated on the assumption that there is no influence of said first power source (10), the actual requisite for no appearance of an electric signal due to $V_H$ in the output voltage $V_o$ is that the potential of connection point A and that of connection point B are exactly equal with respect to said first earth (15). Now, the values $R_1$ and $R_2$ of resistors (12) and (13), respectively, can be set to the same level and the equivalent resistances Rs1 and Rs2 of the sensor element are substantially equal in a homogeneous water vapour or gaseous atmosphere. Therefore, the above requisite is fulfilled and accordingly there is no entry of the electric signal from said first power source (10) into the output voltage.

Figure 2c shows another form of a sensor control circuit which converts the impedance between connection points A and B, i.e. the impedance of the sensor element, into a train of pulses. An oscillator consists of a capacitor (21), operational amplifiers (22), (23), resistors (24), (25) and the impedance between connection points A and B. The oscillation frequency f is represented by the expression:

$$f = \frac{R_3}{4CR_sR_4} \text{ (Hz)} \qquad (2)$$

where C is the capacity of the capacitor (21), $R_3$ and $R_4$ are the resistive values of resistors (24) and (25), respectively, and $R_s$ is the impedance between contact points A and B.

It will be apparent from the foregoing description that the sensor control circuit according to this invention provides for an improved accuracy of impedance detection in the field of art to which this invention pertains. It will also be apparent to those skilled in the art that many changes and modifications may be made in the described circuit and means without departing from the scope of the appended claims.

**Claims**

1. A sensor circuit comprising a sensing device which includes a planar sensor element (1) disposed between first and second plate electrodes (2, 3) having predetermined exothermic resistance values and being disposed on opposite major surfaces of the sensor element, two lead wires (4, 6) extending from the first plate electrode (2), and a further lead wire (5) extending from the second plate electrode (3), the circuit further comprising a first power source (10) causing the first plate electrode to generate heat, characterised in that:

the circuit further comprises two resistances (12, 13) of substantially equal value directly connected in series between the two lead wires (4, 6) from the first plate electrode (2), the first power source (10) also being directly connected to the two lead wires (4, 6) and

a second power source (11) is interposed between the connection point (A) of the two resistances (12, 13) and the further lead wire (5) from the second plate electrode (3) for detecting the impedance of the sensor element (1) between the first and second plate electrodes (2, 3).

2. A sensor circuit according to claim 1, characterised in that the first power source (10) includes a first earth connection (15) and the second power source (11) includes a second earth connection (16), the two earth connections being electrically independent of each other.

3. A sensor circuit according to claim 1 or 2, characterised in that the sensor element (1) is made of a ceramic material.

4. A sensor circuit according to claim 3, characterised in that the ceramic material is magnesium spinel-rutile.

5. A sensor circuit according to any one of the preceding claim, characterised in that the plate electrodes (2, 3) are made of ruthenium oxide.

**Patentansprüche**

1. Meßfühlerschaltung einschließlich einer Abfühlvorrichtung mit einem ebenen Meßfühlerelement (1), das angeordnet ist zwischen ersten und zweiten Plattenelektroden (2, 3), die vorbestimmte exothermische Widerstandswerte aufweisen und an gegenüberliegenden Hauptflächen des Meßfühlerelementes angeordnet sind, mit zwei Leitungsdrähten (4, 6), die sich von der ersten Plattenelektrode (2) erstrecken, und mit einem weiteren Leitungsdraht (5), der sich von der zweiten Plattenelektrode (3) erstreckt, wobei die Schaltung ferner eine erste Energiequelle (10) aufweist, die verursacht, daß die erste Plattenelektrode Wärme erzeugt, dadurch gekennzeichnet, daß die Schaltung weiterhin zwei Widerstände (12, 13) von im wesentlichen gleichem Wert aufweist, die in Reihe direkt zwischen die zwei Leitungsdrähte (4, 6) von der ersten Plattenelektrode (2) geschaltet sind, wobei die erste Energiequelle (10) ebenfalls direkt an die zwei Leitungsdrähte (4, 6) angeschlossen ist, und daß eine zweite Energiequelle (11) zwischen der Verbindungsstelle (A) der zwei Widerstände (12, 13) und dem weiteren Leitungsdraht (5) von der zweiten Plattenelektrode (3) angeordnet ist, um die Impedanz des Meßfühlerelementes (1) zwischen der ersten und zweiten Plattenelektrode (2, 3) zu ermitteln.

2. Meßfühlerschaltung nach Anspruch 1, dadurch gekennzeichnet, daß die erste Energiequelle (10) einen ersten Erdanschluß (15) und die zweite Energiequelle (11) einen zweiten Erdanschluß (16) aufweisen, wobei die zwei Erdanschlüsse elektrisch unabhängig voneinander sind.

3. Meßfühlerschaltung nach Anspruch 1 oder 2, dadurch gekennzeichnet, daß das Meßfühlerelement (1) aus einem keramischen Material besteht.

4. Meßfühlerschaltung nach Anspruch 3, dadurch gekennzeichnet, daß das keramische Material Spinell-Magnesiumrutil ist.

5. Meßfühlerschaltung nach irgendeinem der vorhergehenden Ansprüche, dadurch gekennzeichnet, daß die Plattenelektroden (2, 3) aus Rutheniumoxid bestehen.

**Revendications**

1. Circuit détecteur comprenant un dispositif de détection qui comporte un élément détecteur plan (1) disposé entre une première et une deuxième électrode en forme de plaque (2), (3) possédant des valeurs de résistance exothermique prédéterminées et disposées sur les surfaces principales opposées de l'élément détecteur, deux fils conducteurs (4, 6) venant de la première électrode en forme de plaque (2), et un fil conducteur supplémentaire (5) venant de la deuxième électrode en forme de plaque (3), le circuit comprenant en outre une première source d'alimentation électrique (12) qui amène la première électrode en forme de plaque à produire de la chaleur, caractérisé en ce que:

le circuit comprend en outre deux résistances (12, 13) de valeurs sensiblement égales qui sont directement connectées en série entre les deux fils conducteurs (4, 6) venant de la première électrode en forme de plaque (2), la première source d'alimentation électrique (10) étant aussi directement connectée aux deux fils conducteurs (4, 6) et

une deuxième source d'alimentation électrique (11) est disposée entre le point de connexion (A) des deux résistances (12, 13) et le fil conducteur supplémentaire (5) venant de la deuxième électrode en forme de plaque (3) afin de mesurer l'impédance de l'élément détecteur (1) entre la première et la deuxième électrode en forme de plaque (2, 3).

2. Circuit détecteur selon la revendication 1, caractérisé en ce que la première source d'alimentation électrique (10) comporte une première connexion à la terre (15) et la deuxième source d'alimentation électrique (11) comporte une deuxième connexion à la terre (16), les deux connexions à la terre étant électriquement indépendantes l'une de l'autre.

3. Circuit détecteur selon la revendication 1 ou 2, caractérisé en ce que l'élément détecteur (1) est fait d'un matériau du type céramique.

4. Circuit détecteur selon la revendication 3, caractérisé en ce que le matériau du type céramique est une spinelle de magnésium-rutile.

5. Circuit détecteur selon l'une quelconque des revendications précédentes, caractérisé en ce que les électrodes en forme de plaque (2, 3) sont faites en oxyde de ruthénium.

Fig. Ia

Fig. Ib

1

Fig. 2a

Fig. 2b

Fig. 2c